# EUROPÄISCHE PATENTSCHRIFT

(11) **EP 2 519 428 B1**
(45) Veröffentlichungstag und Bekanntmachung des Hinweises auf die Patenterteilung: **23.12.2015**
(21) Anmeldenummer: 10778922.4
(22) Anmeldetag: 29.10.2010
(51) Int. Cl.: B60T 8/36, F16K 31/06

(54) **MAGNETVENTIL**
SOLENOID VALVE
ÉLECTROVANNE

(30) Priorität: 28.12.2009 DE 102009055339
(43) Veröffentlichungstag der Anmeldung: 07.11.2012
(73) Patentinhaber: Robert Bosch GmbH, 70442 Stuttgart (DE)
(72) Erfinder: KARL, Andreas, 71726 Benningen/Neckar (DE); RICHTER, Florian, 71282 Hemmingen (DE); HOLZ, Oliver, 72657 Altenriet (DE); HOUIS, Nicolas, 74321 Bietigheim-Bissingen (DE); FRICKE-SCHMIDT, Joerg, South Carolina (US); GARDT, Andrej, 74081 Heilbronn (DE); VIER, Elmar, 71691 Freiberg A. N. (DE)
(86) Internationale Anmeldenummer: PCT/EP2010/066451
(87) Internationale Veröffentlichungsnummer: WO 2011/079980

(56) Entgegenhaltungen:
- EP-A2- 0 423 755
- EP-A2- 1 810 902
- WO-A1-2007/033855
- DE-A1- 19 716 856
- DE-A1-102007 007 784

## Beschreibung

Die Erfindung betrifft ein Magnetventil mit mindestens einer fluidbefüllbaren, in einem Gehäuse des Magnetventils vorgesehenen Kammer, einem mit einer Betätigungsvorrichtung verlagerbaren Schließkolben und einem der Betätigungsvorrichtung entgegenwirkenden Federelement, wobei ein Ringelement vorgesehen ist, welches die Kammer in eine erste und eine zweite Teilkammer unterteilt, von dem in einer Führungsöffnung des Ringelements angeordneten Schließkolben des Magnetventils in axialer Richtung zumindest teilweise, insbesondere vollständig durchgriffen ist und mindestens eine von der Führungsöffnung verschiedene Fluiddurchtrittsausnehmung aufweist, wobei das Federelement in der ersten Teilkammer angeordnet ist und sich auf dem Ringelement abstützt, wobei ein Einlass und ein Auslass für das Fluid mit der zweiten Teilkammer verbunden sind, wobei die Fluiddurchtrittsausnehmung als Fluiddurchtrittstasche ausgebildet ist und einen Grundkörper des Ringelements in radialer Richtung zumindest teilweise durchgreift, und wobei die Fluiddurchtrittstasche in einer Außenumfangsfläche des Ringelements ausgebildet ist.

### Stand der Technik

Magnetventile der eingangs genannten Art sind aus dem Stand der Technik bekannt. Sie werden beispielsweise in Fahrerassistenzeinrichtungen, wie beispielsweise ABS-, TCS-, ESP-Systemen und dergleichen, eingesetzt. Ein solches Magnetventil kann dabei als 2/2-Magnetventil ausgebildet sein. Dieses wird auch als Durchgangsventile bezeichnet. Die Magnetventile dienen vor allem dem Dosieren eines Fluids. Sie weisen dazu eine Betätigungsvorrichtung auf, mit welcher eine Durchgangsöffnung des Magnetventils zumindest teilweise geöffnet oder geschlossen werden kann. Die Betätigungsvorrichtung umfasst dabei einen Elektromagnet, das Magnetventil ist also elektrisch betätigbar. Über die Durchgangsöffnung kann eine Fluidverbindung zwischen einem Einlass und einem Auslass des Magnetventils hergestellt werden. Dabei kann es insbesondere vorgesehen sein, dass die Durchgangsöffnung in einer Ruhestellung des Magnetventils geschlossen ist und durch Anlegen einer Spannung an den Elektromagnet geöffnet wird. Alternativ ist jedoch auch eine umgekehrte Ausführung möglich, bei welcher die Durchgangsöffnung in der Ruhestellung des Magnetventils geöffnet ist und nur durch Betätigen der Betätigungsvorrichtung - also beispielsweise durch Anlegen der Spannung an den Elektromagnet - geschlossen wird.

Üblicherweise ist es vorgesehen, dass das Magnetventil ein dem Elektromagnet entgegenwirkendes Federelement aufweist. Dieses Federelement ist in der fluidbefüllbaren Kammer angeordnet. Es sorgt dafür, dass das Magnetventil in seiner Ruhestellung verbleibt beziehungsweise in diese zurückgeführt wird, wenn die Betätigungsvorrichtung nicht aktiviert ist. Dabei beaufschlagt das Federelement, beispielsweise eine Spiralfeder, einerseits die Betätigungsvorrichtung, andererseits beispielsweise einen Dichtkörper mit der Rückstellkraft. Der Dichtkörper ist dazu vorgesehen, mit einem mittels der Betätigungsvorrichtung verlagerbaren Schließkolben zusammenzuwirken, um die Durchgangsöffnung dichtend zu verschließen oder zumindest teilweise freizugeben. In dem Dichtkörper ist dazu der Einlass oder der Auslass des Magnetventils angeordnet, welcher mit dem Schließkolben verschließbar ist. Dabei erstreckt sich zum Einen das Federelement durch die gesamte Kammer, um einerseits mit der Betätigungsvorrichtung zusammenzuwirken und sich andererseits an dem Dichtkörper abzustützen. Auf diese Weise wird der Dichtkörper mit einer Kraft beaufschlagt, welcher unter Umständen Verformungen des Dichtkörpers hervorrufen kann, welche möglicherweise seine Dichtwirkung beeinträchtigt. Auch besteht der Dichtkörper häufig aus einem elastischen Material, sodass es für das Federelement keine definierte Auflagefläche ausbilden kann. Zum Anderen ist das Federelement Fluidkräften ausgesetzt, welche durch Einströmen des Fluids durch die Kammer verursacht werden. Die Strömungsverbindung von Einlass und Auslass des Magnetventils ist also insbesondere über die Kammer hergestellt.

Aus dem Stand der Technik ist beispielsweise die Druckschrift EP 1 810 902 A2 bekannt. Diese betrifft ein Magnetventil mit einem Ventileinsatz und einem im Ventileinsatz beweglich geführten Stößel mit einer Dichtkalotte, welche dichtend in einen Dichtsitz eines Ventilkörpers eintaucht, wobei der Stößel gegen die Federkraft einer Rückstellfeder bewegbar ist. Dabei ist eine außerhalb eines Strömungswegs in einer Bohrung des Ventileinsatzes angeordnete Abstützbuchse vorhanden, welche die Rückstellfeder aufnimmt, abstützt und von außen radial führt.

### Offenbarung der Erfindung

Demgegenüber weist das Magnetventil mit den in Anspruch 1 genannten Merkmalen den Vorteil auf, dass das Federelement keinen unerwünschten Fluidkräften ausgesetzt ist und der Dichtkörper von dem Schließkolben nicht mit einer ihn verformenden Kraft beaufschlagt wird. Dies wird erfindungsgemäß erreicht, indem das Ringelement als Spannhülse ausgebildet ist, wobei die Spannhülse einen Axialschlitz aufweist, und wobei die Fluiddurchtrittstasche rillen-, nuten- und/oder kerbenförmig ist. Grundsätzlich ist ein Ringelement vorgesehen, welches die Kammer in eine erste und eine zweite Teilkammer unterteilt, von dem in einer Führungsöffnung des Ringelements angeordneten Schließkolben des Magnetventils in axialer Richtung zumindest teilweise, insbesondere vollständig durchgriffen ist und mindestens eine von der Führungsöffnung verschiedene Fluiddurchtrittsausnehmung aufweist. Das Ringelement ist also in der Kammer beziehungsweise zwischen der ersten und der zweiten Teilkammer angeordnet. Dabei sind sowohl die erste als auch die zweite Teilkammer ebenso wie die gesamte Kammer fluidbefüllbar. Erfindungsgemäß sind Einlass und Auslass lediglich einer der Teilkammern zugeordnet, während in der anderen der Teilkammern lediglich das Federelement, die Betätigungsvorrichtung und ein Bereich des Schließkolbens vorgesehen sind. Das Ringelement kann in Umfangsrichtung unterbrochen sein, muss also - in Umfangsrichtung gesehen - die Kammer nicht vollständig durchgreifen. Das Ringelement weist die Führungsöffnung auf, in welchem der Schließkolben des Magnetventils axial verlagerbar angeordnet ist.

Dabei durchgreift der Schließkolben das Ringelement in axialer Richtung zumindest teilweise. Vorzugsweise ist ein vollständiges Durchgreifen vorgesehen. Die Führungsöffnung ist an den Schließkolben angepasst, weist also einen ähnlichen Durchmesser auf wie dieser, sodass der Schließkolben zwar sicher in dem Ringelement geführt, aber dennoch in axialer Richtung verlagerbar ist. Das bedeutet jedoch auch, dass die erste und die zweite Teilkammer im Wesentlichen fluidtechnisch voneinander getrennt wären, also kein Fluidaustausch zwischen ihnen stattfinden könnte. Aus diesem Grund ist die Fluiddurchtrittsausnehmung vorgesehen, welche von der Führungsöffnung verschieden ist, dabei aber nicht notwendigerweise von dieser beabstandet sein muss. Die Fluiddurchtrittsausnehmung ermöglicht einen Fluidaustausch zwischen der ersten und der zweiten Teilkammer. Auf diese Weise wird die Funktion des Magnetventils durch das Ringelement nicht beeinträchtigt. Das Ringelement umgreift den Schließkolben zumindest bereichsweise. Es liegt zumindest bereichsweise an einer Innenwand des Gehäuses an oder stützt sich an dieser ab beziehungsweise ist dort gehalten/befestigt. Das Ringelement ermöglicht ein sicheres Abstützen des Federelements, sodass ein zuverlässiges Rückstellen beziehungsweise Halten des Schließkolbens in seiner Ruhestellung realisiert ist. Zusätzlich kann auf diese Weise erreicht werden, dass das Federelement nicht von unerwünschten Fluidkräften beaufschlagt wird, die beispielsweise bei einem Durchströmen der Kammer durch das Fluid entstehen.

Es ist vorgesehen, dass das Ringelement als Spannhülse ausgebildet ist. In einer nicht erfindungsgemäßen Ausgestaltung ist das Ringelement alternativ als Klemmhülse ausgestaltet. Sowohl die Spannhülse als auch die Klemmhülse sind in der Kammer beziehungsweise an der Innenwand des Gehäuses klemmend gehalten. Sie weisen also die gleichen, vorzugsweise größere Abmessungen auf wie die Kammer, um diese klemmende Verbindung zu realisieren. Die Spannhülse weist dabei einen Axialschlitz auf, welcher es ermöglicht, sie auf einfache Weise in die Kammer einzubringen. Die Klemmhülse ist dagegen ohne den Axialschlitz ausgebildet, umgreift also den Schließkolben in Umfangsrichtung vollständig.

Zudem ist vorgesehen, dass die Fluiddurchtrittsausnehmung als Fluiddurchtrittstasche ausgebildet ist und einen Grundkörper des Ringelements in radialer Richtung zumindest teilweise durchgreift. Die Fluiddurchtrittstasche ist dabei derart ausgebildet, dass sie gegenüber einer Umfangsfläche des Ringelements zurückspringt, die Wandstärke des Ringelements in dem Bereich der Fluiddurchtrittstasche also verringert ist. Ebenso kann es vorgesehen sein, dass die Fluiddurchtrittsausnehmung das Ringelement in radialer Richtung vollständig durchgreift. Dies ist beispielsweise für die Spannhülse der Fall, bei welcher der Axialschlitz die Fluiddurchtrittsausnehmung bildet. Die Fluiddurchtrittsausnehmung stellt die Fluidverbindung zwischen der ersten und der zweiten Teilkammer unabhängig von der Führungsöffnung her.

Dabei soll die Fluiddurchtrittstasche in einer Außenumfangsfläche des Ringelements ausgebildet sein. In einer nicht erfindungsgemäßen Ausgestaltung ist die Fluiddurchtrittstasche in einer Innenumfangsfläche des Ringelements ausgebildet. Ist die Fluiddurchtrittstasche in der Außenumfangsfläche ausgebildet, so erstreckt sie sich radial nach innen, ist sie in der Innenumfangsfläche vorgesehen, radial nach außen. Die Fluiddurchtrittstasche erstreckt sich lediglich teilweise über die Außenumfangsfläche beziehungsweise die Innenumfangsfläche.

Schließlich ist vorgesehen, dass die Fluiddurchtrittstasche rillen-, nuten- und/oder kerbenförmig ist. Prinzipiell kann die Fluiddurchtrittstasche beliebig ausgeformt sein. Bevorzugt ist jedoch eine Rillen-, Nuten- beziehungsweise Kerbenform. Die Rillenform weist dabei einen zumindest bereichsweise runden oder ovalen Querschnitt auf, die Nutenform einen im Wesentlichen rechteckigen Querschnitt und die Kerbenform einen im Wesentlichen dreieckigen Querschnitt.

Eine Weiterbildung der Erfindung sieht vor, dass neben der Fluiddurchtrittstasche mindestens ein Stützsteg ausgebildet ist, welcher an einer Innenwand des Gehäuses anliegt. Der Stützsteg sorgt für die Verbindung zu dem Gehäuse beziehungsweise zu der Innenwand des Gehäuses und damit der Befestigung des Ringelements. Der Stützsteg kann in Umfangsrichtung eine beliebige Breite aufweisen und in axialer Richtung durchgehend oder auch unterbrochen ausgebildet sein. Sind mehrere Fluiddurchtrittstaschen vorgesehen, so ist der Stützsteg jeweils zwischen diesen angeordnet. Um eine möglichst gute Fluidverbindung zwischen der ersten und der zweiten Teilkammer herzustellen, ist es vorteilhaft, wenn der Gesamtquerschnitt der Fluiddurchtrittstaschen größer ist als der Gesamtquerschnitt, welcher von dem mindestens einen Stützsteg eingenommen ist.

Eine Weiterbildung der Erfindung sieht vor, dass die Fluiddurchtrittsausnehmung in axialer Richtung gerade, schräg und/oder spiralförmig verläuft. Mit dem Verlauf der Fluiddurchtrittsausnehmung kann ihr Durchströmungsverhalten eingestellt werden. Bevorzugt ist der gerade Verlauf der Fluiddurchtrittsausnehmung , alternativ kann jedoch auch ein schräger beziehungsweise spiralförmiger Verlauf vorgesehen sein.

Eine Weiterbildung der Erfindung sieht vor, dass mehrere

Fluiddurchtrittsausnehmungen über den Umfang des Ringelements, insbesondere gleichmäßig, verteilt vorgesehen sind. Um eine möglichst gute Strömungsverbindung zwischen der ersten und der zweiten Teilkammer zu erreichen, sind vorzugsweise mehrere Fluiddurchtrittsausnehmungen vorgesehen. Diese können beliebig an dem Ringelement vorgesehen sein, bevorzugt ist jedoch die über den Umfang verteilte Anordnung, da auf diese Weise eine besonders gute Durchströmung mit geringem Druckverlust erreicht wird. Dies gilt insbesondere dann, wenn die Fluiddurchtrittsausnehmungen gleichmäßig verteilt sind.

Eine Weiterbildung der Erfindung sieht vor, dass das Ringelement eine Stützfläche für das Federelement des Magnetventils besitzt. Wie bereits vorstehend ausgeführt, dient das Ringelement bevorzugt zum Abstützen des Federelements. Zu diesem Zweck ist die Stützfläche vorgesehen, welche auf das Federelement angepasst sein kann. Insbesondere kann die Stützfläche Mittel zum Befestigen und/oder Führen des Federelements aufweisen.

Die Erfindung wird nachfolgend anhand der in der Zeichnung dargestellten Ausführungsbeispiele näher erläutert, ohne dass eine Beschränkung der Erfindung erfolgt. Es zeigen:
- Figur 1: einen Querschnitt eines Magnetventils mit einem in einer Kammer angeordneten Ringelement,
- Figur 2: eine nicht erfindungsgemäße erste Ausführungsform des Ringelements, und
- Figur 3: eine erfindungsgemäße zweite Ausführungsform des Ringelements.

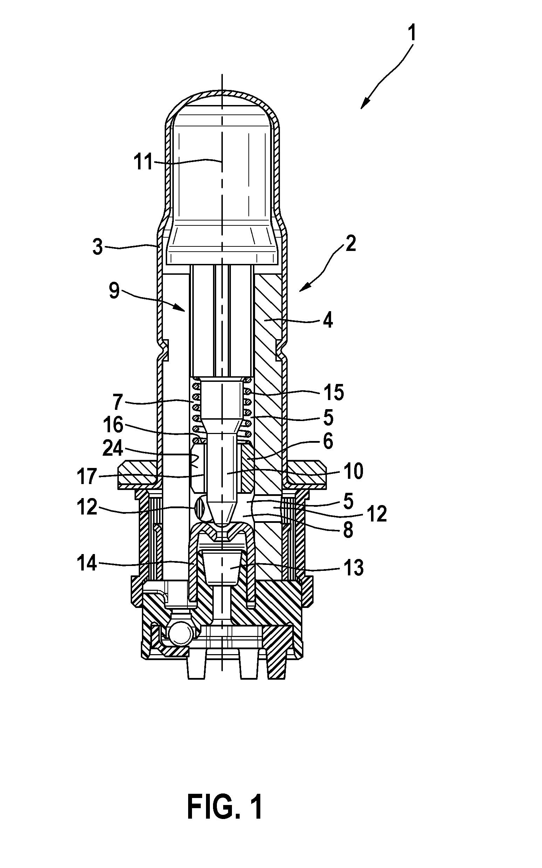

Die Figur 1 zeigt ein Magnetventil 1 mit einem Gehäuse 2, welches aus einer zumindest bereichsweise umlaufenden Hülle 3 und mindestens einem Strukturelement 4 besteht. In dem Gehäuse 2 des Magnetventils 1 ist eine Kammer 5 vorgesehen, welche von einem Ringelement 6 in eine erste Teilkammer 7 und eine zweite Teilkammer 8 unterteilt ist. Das Magnetventil 1 weist weiterhin eine Betätigungsvorrichtung 9 auf, welche über zumindest einen (hier nicht dargestellten) Elektromagnet verfügt. Mittels der Betätigungsvorrichtung 9 ist ein Schließkolben 10 in axialer Richtung - bezogen auf eine Längsachse 11 des Magnetventils 1 - verlagerbar.

Das Magnetventil 1 verfügt über einen Einlass 12 und einen Auslass 13 für Fluid. Es können auch mehrere Einlässe 12 vorgesehen sein, wie dies in der Figur 1 dargestellt ist. Der Einlass 12 steht in permanenter Fluidverbindung mit der zweiten Teilkammer 8. Eine Fluidverbindung zwischen der zweiten Teilkammer 8 und dem Auslass 13 beziehungsweise zwischen dem Einlass 12 und dem Auslass 13 kann mit dem Magnetventil 1 geschlossen oder zumindest teilweise geöffnet werden. Zu diesem Zweck wirkt der Schließkolben 10 mit einem Dichtkörper 14 zusammen. In einer Schließstellung liegt der Schließkolben 10 derart auf dem Dichtkörper 14 auf, dass die Fluidverbindung unterbrochen ist. In einer Offenstellung ist dagegen der Schließkolben 10 in axialer Richtung nach oben verlagert, sodass die Fluidverbindung freigegeben ist. In der hier dargestellten Ausführungsform des Magnetventils 1 entspricht die Offenstellung einer Ruhestellung des Schließkolbens 10. Das bedeutet, dass die Fluidverbindung zwischen Einlass 12 und Auslass 13 vorliegt, bis der Schließkolben 10 mittels der Betätigungsvorrichtung 9 in axialer Richtung verlagert wird, sodass er auf den Dichtkörper 14 zutritt und mit diesem zum Unterbrechen der Fluidverbindung zusammenwirkt. Zu diesem Zweck ist in der ersten Teilkammer 7 ein als Druckfeder ausgebildetes Federelement 15 angeordnet, welches einerseits auf die Betätigungsvorrichtung 9 eine Rückstellkraft ausübt und sich andererseits auf dem Ringelement 6 abstützt. Zu diesem Zweck weist das Ringelement 6 eine Stützfläche 16 auf. Alternativ kann das Federelement 15 auch als Zugfeder vorliegen. In diesem Fall ist die Schließstellung die Ruhestellung.

Mit der Stützfläche 16 ist zum Einen eine zuverlässige Abstützung des Federelements 15 sichergestellt und zum Anderen befindet sich das Federelement 15 in einem Bereich, in welchem es nicht durch unerwünschte Fluidkräfte beaufschlagt ist. Diese Fluidkräfte entstehen beispielsweise bei einem Durchströmen des Magnetventils 1 durch das Fluid, wenn die Fluidverbindung zwischen Einlass 12 und Auslass 13 freigegeben ist. Der Schließkolben 10 ist zur axialen Führung in einer Führungsöffnung 17 des Ringelements 6 gelagert. Dabei umgreift das Ringelement 6 den Schließkolben 10 zumindest bereichsweise in Umfangsrichtung.

Der Schließkolben 10 durchgreift das Ringelement in axialer Richtung zumindest teilweise, insbesondere vollständig, wie dies in der Figur 1 dargestellt ist. Es weist dabei eine hier nicht erkennbare Fluiddurchtrittsausnehmung 18 auf, welche eine Fluidverbindung zwischen der ersten Teilkammer 7 und der zweiten Teilkammer 8 ermöglicht. Diese Fluidverbindung ist vorgesehen, um einen zuverlässigen Fluidaustausch zwischen den beiden Teilkammern 7 und 8 zu ermöglichen und damit die Verlagerbarkeit des Schließkolbens 10 mittels der Betätigungsvorrichtung 9 sicherzustellen. Bei einer nicht ausreichenden Fluidverbindung würde sich in der ersten Teilkammer 7 bei Betätigung der Betätigungsvorrichtung 9 ein Druck aufbauen, welcher dem Verlagern des Schließkolbens 10 entgegenwirken würde. Dies wird durch die Fluiddurchtrittsausnehmungen 18 verhindert. Zumindest teilweise kann die Fluidverbindung auch über die Führungsöffnung 17 dargestellt sein. Um jedoch eine zuverlässige Führung des Schließkolbens 10 zu ermöglichen, weist diese zumindest ähnliche Abmessung auf wie dieser. Aus diesem Grund ist es notwendig, die von der Führungsöffnung 17 verschiedene Durchtrittsausnehmung 18 vorzusehen.

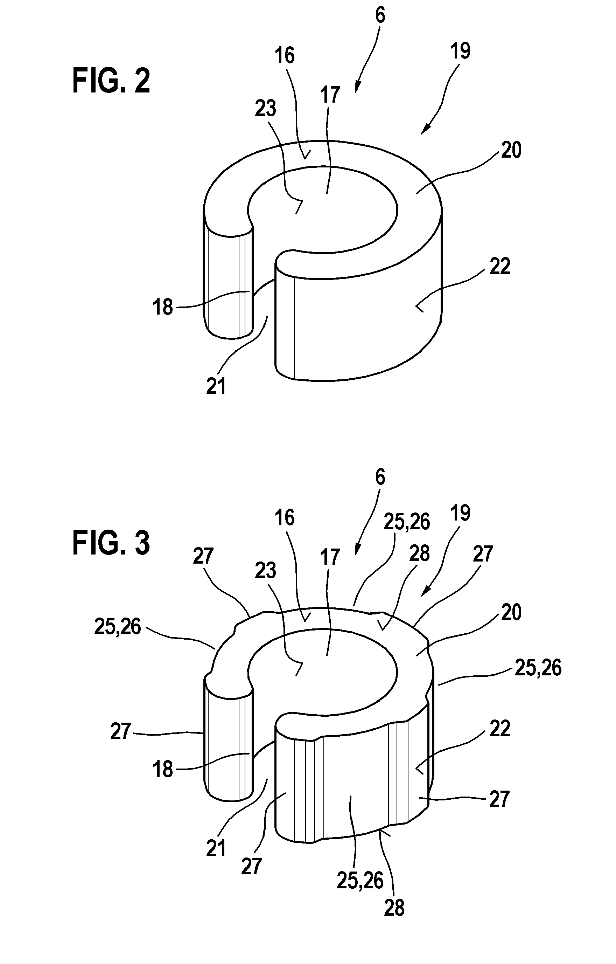

Die Figur 2 zeigt eine nicht erfindungsgemäße erste Ausführungsform des Ringelements 6. Das Ringelement 6 ist in dieser Ausführungsform als - im Querschnitt - runde, insbesondere kreisrunde Spannhülse 19 ausgebildet, was bedeutet, dass in einem Grundkörper 20 des Ringelements 6 ein Axialschlitz 21 vorgesehen ist. Dieser Axialschlitz 21 ermöglicht eine Verkleinerung des Ringelements 6 in radialer Richtung bei seiner Montage in dem Gehäuse 2 des Magnetventils 1. Dabei dient der Axialschlitz 21 jedoch gleichzeitig als Fluiddurchtrittsausnehmung 18. In dem Grundkörper 20 ist zudem die Führungsöffnung 17 vorgesehen. In der hier vorliegenden Ausführungsform durchgreift die Fluiddurchtrittsausnehmung 18 also den Grundkörper 20 in radialer Richtung vollständig. Dabei mündet sie sowohl in eine Außenumfangsfläche 22 als auch in eine Innenumfangsfläche 23 des Ringelements 6 und damit in die Führungsöffnung 17 ein. Das Ringelement 6 liegt mit der Außenumfangsfläche 22 an einer Innenwand 24 (siehe Figur 1) des Gehäuses 2 an und ist auf diese Weise in der Kammer 5 so gehalten, dass es die beiden Teilkammern 7 und 8 zumindest teilweise voneinander abtrennt. Da die Führungsöffnung 17 im Wesentlichen von dem Schließkolben 10 ausgefüllt ist, ist die Strömungsverbindung zwischen den Teilkammern 7 und 8 über den Axialschlitz 21 beziehungsweise die Fluiddurchtrittsausnehmung 18 hergestellt.

Eine erfindungsgemäße weitere Ausführungsform des Ringelements 6 ist in der Figur 3 gezeigt. Dabei ist dieses wiederum als Spannhülse 19 ausgebildet, weist also den Axialschlitz 21 auf, welcher als Fluiddurchtrittsausnehmung 18 dient. Insofern sei auf die vorstehende Beschreibung verwiesen. Zusätzlich weist das Ringelement 6 jedoch vier weitere Fluiddurchtrittsausnehmungen 26 auf, welche in der Außenumfangsfläche 22 ausgebildet sind. Alternativ kann auch eine Anordnung der Fluiddurchtrittsausnehmungen 25 in der Innenumfangsfläche 23 vorgesehen sein. Die Fluiddurchtrittsausnehmungen 25 sind als Fluiddurchtrittstaschen 26 ausgebildet. Das bedeutet, dass sie gegenüber der Außenumfangsfläche 22 in radialer Richtung zurückspringen, sodass eine Vertiefung in dem Grundkörper 20 ausgebildet ist. Die Fluiddurchtrittstaschen 26 sind zumindest bereichsweise rillenförmig ausgebildet.

Zwischen den Fluiddurchtrittstaschen 26 sind Stützstege 27 vorgesehen, über welche das Ringelement 6 mit der Innenwand 24 der Kammer 5 beziehungsweise des Gehäuses 2 in Verbindung tritt, um das Ringelement 6 zu halten beziehungsweise zu befestigen. Über die Stützstege 27 ist also die klemmende Verbindung der Spannhülse 19 herstellbar. Sowohl die Stützstege 27 als auch die Fluiddurchtrittstaschen 26 sind gleichmäßig über den Umfang des Ringelements 6 verteilt. Auf diese Weise ist eine zuverlässige Strömungsverbindung zwischen den Teilkammern 7 und 8 hergestellt. In dem dargestellten Ausführungsbeispiel verlaufen die Fluiddurchtrittstaschen 26 in axialer Richtung gerade durch das Ringelement 6 beziehungsweise dessen Außenumfangsfläche 22. Alternativ kann es jedoch auch vorgesehen sein, dass ein schräger beziehungsweise spiralförmiger Verlauf der Fluiddurchtrittstaschen 26 vorliegt.

Zusätzlich oder alternativ können die Fluiddurchtrittsausnehmungen 25 als Fluiddurchtrittsbohrungen (nicht dargestellt) vorliegen. Dies sind Bohrungen, welche in Stirnflächen 28 des Ringelements 6 einmünden und dabei durch den Grundkörper 20 verlaufen.

Gegenüber den aus dem Stand der Technik bekannten Magnetventilen weist das Magnetventil 1 den Vorteil auf, dass die Stützfläche 16 für das Federelement 15 vorgesehen ist und zudem das Federelement 15 in einem Bereich des Magnetventils 1 angeordnet ist (nämlich in der ersten Teilkammer 7), in welcher es nicht durch unerwünschte Fluidkräfte beeinträchtigt wird. Dies wäre beispielsweise der Fall, wenn das Ringelement 6 nicht vorhanden wäre und sich somit das Federelement 15 auf dem Dichtkörper 14 abstützen müsste. Dann wäre das Federelement 15 in der Strömungsverbindung zwischen dem Einlass 12 und dem Auslass 13 angeordnet, sodass die Fluidströmung durch das Magnetventil 1 hindurch Einfluss auf das Federelement 15 und dessen Rückstellkraft auf die Betätigungsvorrichtung 9 beziehungsweise den Schließkolben 10 nehmen könnte. Dies wird durch die Anordnung des Ringelements 6 vermieden, sodass das vorstehend beschriebene Magnetventil 1 äußerst zuverlässig arbeitet.

## Patentansprüche

1. Magnetventil (1) mit mindestens einer fluidbefüllbaren, in einem Gehäuse (2) des Magnetventils (1) vorgesehenen Kammer (5), einem mit einer Betätigungsvorrichtung (9) verlagerbaren Schließkolben (10) und einem der Betätigungsvorrichtung (9) entgegenwirkenden Federelement (15), wobei ein Ringelement (6), welches die Kammer (5) in eine erste und eine zweite Teilkammer (7,8) unterteilt, von dem in einer Führungsöffnung (17) des Ringelements (6) angeordneten Schließkolben (10) des Magnetventils (1) in axialer Richtung zumindest teilweise, insbesondere vollständig, durchgriffen ist und mindestens eine von der Führungsöffnung (17) verschiedene Fluiddurchtrittsausnehmung (18,25) aufweist, wobei das Federelement (15) in der ersten Teilkammer (7) angeordnet ist und sich auf dem Ringelement (6) abstützt, wobei ein Einlass (12) und ein Auslass (13) für das Fluid mit der zweiten Teilkammer (8) verbunden sind, wobei die Fluiddurchtrittsausnehmung (18,25) als Fluiddurchtrittstasche (26) ausgebildet ist und einen Grundkörper (20) des Ringelements (6) in radialer Richtung zumindest teilweise durchgreift, und wobei die Fluiddurchtrittstasche (26) in einer Außenumfangsfläche (22) des Ringelements (6) ausgebildet ist, **dadurch gekennzeichnet, dass** das Ringelement (6) als Spannhülse (19) ausgebildet ist, wobei die Spannhülse (19) einen Axialschlitz (21) aufweist, und dass die Fluiddurchtrittstasche (26) rillen-, nuten- und/oder kerbenförmig ist.

2. Magnetventil nach Anspruch 1, **dadurch gekennzeichnet, dass** neben der Fluiddurchtrittstasche (26) mindestens ein Stützsteg (27) ausgebildet ist, welcher an einer Innenwand (24) des Gehäuses (2) anliegt.

3. Magnetventil nach einem der vorhergehenden Ansprüche, **dadurch gekennzeichnet, dass** die Fluiddurchtrittsausnehmung (18,25) in axialer Richtung gerade, schräg und/oder spiralförmig verläuft.

4. Magnetventil nach einem der vorhergehenden Ansprüche, **dadurch gekennzeichnet, dass** mehrere Fluiddurchtrittsausnehmungen (18,25) über den Umfang des Ringelements (6), insbesondere gleichmäßig, verteilt vorgesehen sind.

5. Magnetventil nach einem der vorhergehenden Ansprüche, **dadurch gekennzeichnet, dass** das Ringelement (6) eine Stützfläche (16) für das Federelement (15) des Magnetventils (1) besitzt.

## Claims

1. Solenoid valve (1) having at least one chamber (5) which can be filled with fluid and is provided in a housing (2) of the solenoid valve (1), a closing piston (10) which can be displaced by way of an actuating apparatus (9), and a spring element (15) which counteracts the actuating apparatus (9), a ring element (6) which divides the chamber (5) into a first and a second part chamber (7, 8) being penetrated at least partially, in particular completely, in the axial direction by the closing piston (10) of the solenoid valve (1), which closing piston (10) is arranged in a guide opening (17) of the ring element (6), and having at least one fluid passage recess (18, 25) which is different from the guide opening (17), the spring element (15) being arranged in the first part chamber (7) and being supported on the ring element (6), an inlet (12) and an outlet (13) for the fluid being connected to the second part chamber (8), the fluid passage recess (18, 25) being configured as a fluid passage pocket (26) and penetrating at least partially a main body (20) of the ring element (6) in the radial direction, and the fluid passage pocket (26) being configured in an outer circumferential face (22) of the ring element (6), **characterized in that** the ring element (6) is configured as a clamping sleeve (19), the clamping sleeve (19) having an axial slot (21), and **in that** the fluid passage pocket (26) is channel-shaped, groove-shaped and/or notch-shaped.

2. Solenoid valve according to Claim 1, **characterized in that** at least one supporting web (27) which bears against an inner wall (24) of the housing (2) is configured next to the fluid passage pocket (26).

3. Solenoid valve according to either of the preceding claims, **characterized in that** the fluid passage recess (18, 25) runs in a straight, oblique and/or helical manner in the axial direction.

4. Solenoid valve according to one of the preceding claims, **characterized in that** a plurality of fluid passage recesses (18, 25) are provided distributed, in particular uniformly, over the circumference of the ring element (6).

5. Solenoid valve according to one of the preceding claims, **characterized in that** the ring element (6) has a supporting face (16) for the spring element (15) of the solenoid valve (1).

## Revendications

1. Soupape magnétique (1) dotée d'au moins une chambre (5) apte à être remplie de fluide et prévue dans un boîtier (2) de la soupape magnétique (1), d'un piston de fermeture (10) apte à être déplacé par un ensemble d'actionnement (9) et d'un élément élastique (15) qui s'oppose à l'ensemble d'actionnement (9),
un élément annulaire (6) qui divise la chambre (5) en une première et une deuxième chambre partielle (7, 8) étant traversé au moins en partie et en particulier complètement dans la direction axiale par le piston de fermeture (10) de la soupape magnétique (1) disposé dans une ouverture de guidage (17) de l'élément annulaire (6) et présentant au moins une découpe (18, 25) de passage de fluide différente de l'ouverture de guidage (17),
l'élément élastique (15) étant disposé dans la première chambre partielle (7) et s'appuyant sur l'élément annulaire (6),
une admission (12) et une sortie (13) de fluide étant raccordées à la deuxième chambre partielle (8),
la découpe (18, 25) de passage de fluide étant configurée comme poche (26) de passage de fluide et traversant au moins en partie un corps de base (20) de l'élément annulaire (6) dans la direction radiale,
la poche (26) de passage de fluide étant formée dans une surface périphérique extérieure (22) de l'élément annulaire (6),
**caractérisée en ce que**
l'élément annulaire (6) est configuré comme douille de serrage (19),
**en ce que** la douille de serrage (19) présente une fente axiale (21) et
**en ce que** la poche (26) de passage de fluide est configurée en rainure, sillon et/ou entaille.

2. Soupape magnétique selon la revendication 1, **caractérisé en ce qu'**au moins une traverse de soutien (27) est formée en plus de la poche (26) de passage de fluide et repose contre une paroi intérieure (24) du boîtier (2).

3. Soupape magnétique selon l'une des revendications précédentes, **caractérisée en ce que** la découpe (18, 25) de passage de fluide s'étend en ligne droite, obliquement et/ou en spirale dans la direction axiale.

4. Soupape magnétique selon l'une des revendications précédentes, **caractérisée en ce que** plusieurs découpes (18, 25) de passage de fluide sont réparties, en particulier régulièrement, sur la périphérie de l'élément annulaire (6).

5. Soupape magnétique selon l'une des revendications précédentes, caractérisée ce que l'élément annulaire (6) possède une surface de soutien (16) pour l'élément élastique (15) de la soupape magnétique (1).
